# FASCICULE DE BREVET EUROPEEN

(11) **EP 1 507 384 B1**
(45) Date de publication et mention de la délivrance du brevet: **10.06.2015**
(21) Numéro de dépôt: 04291974.6
(22) Date de dépôt: 02.08.2004
(51) Int. Cl.: H04L 29/06, H04L 29/12

(54) **Procédé de masquage des traitements applicatifs d'une requete d'accès à un serveur et système de masquage correspondant**
Verfahren zum Ausblenden einer Weiterverarbeitung von einer Zugriffsanforderung zu einem Server und entsprechende Vorrichtung
Method of masking the processing of an access request to a server and corresponding system

(30) Priorité: 12.08.2003 FR 0309872
(43) Date de publication de la demande: 16.02.2005
(73) Titulaire: Orange, 75015 Paris (FR)
(72) Inventeur: Mittig, Karel, 14000 Caen (FR); Goutard, Cédric, 14400 Douvres la Delivrande (FR); Agostini, Pierre, 14320 Feuguerolles (FR)
(74) Mandataire: Cabinet Plasseraud

(56) Documents cités:
- "Configuring Covalent Headers" COVALENT ENTERPRISE READY SERVER PRODUCT GUIDE, [Online] 1 juillet 2002 (2002-07-01), XP002273946 Extrait de l'Internet: URL:http://www.covalent.net/support/docs/e rs/2.2.0/HTML/ProductGuide/proxymodule.htm l> [extrait le 2004-03-17]
- NORIFUSA M: "Internet security: difficulties and solutions" mars 1998 (1998-03), INTERNATIONAL JOURNAL OF MEDICAL INFORMATICS, ELSEVIER SCIENTIFIC PUBLISHERS, SHANNON, IR, PAGE(S) 69-74 , XP004149463 ISSN: 1386-5056 * page 73, colonne 1 *
- ABOBA B ET AL: "RFC 2607: Proxy chaining and policy implementation in roaming" RFC, juin 1999 (1999-06), XP002138087

## Description

L'invention est relative à un procédé de masquage des traitements applicatifs d'une requête d'accès à un serveur et au système de masquage correspondant.

Lors de la connexion d'un poste de travail à un serveur sur le réseau IP, le poste de travail est identifié, vis-à-vis du serveur, par une adresse IP, dite adresse client. Cette adresse client est en général utilisée afin de personnaliser le contenu des informations proposées en réponse au client, de mettre en oeuvre des mécanismes de contrôle d'accès par vérification de droits d'accès, d'assurer des mécanismes de comptage et/ou de facturation.

Actuellement, de plus en plus d'opérateurs réseaux et de fournisseurs d'accès s'orientent vers la mise en oeuvre de services en coeur de réseau tels que filtrage de virus, contrôle parental, ou autre, dans le but d'apporter de la valeur ajoutée à l'accès à leur réseau.

La mise en oeuvre de ces services, au moyen de traitements applicatifs spécifiques, pose le problème de l'impact de ces derniers sur l'architecture existante.

Dans ces conditions, la mise en oeuvre de services entre un poste de travail client et un serveur n'est pas neutre, car elle supprime, en définitive, la connexion entre le poste de travail client et le serveur. Ceci a pour effet de masquer le serveur au client et réciproquement, avec pour conséquence une détérioration, parfois visible, des conditions d'accès pour le client.

Les services précités mettent en oeuvre des mécanismes spécifiques qui ont pour objet la mise en oeuvre de ces services de façon transparente pour le poste de travail client et/ou le serveur. Ces mécanismes, permettant de masquer la présence et le traitement applicatif engendré par ce service entre un poste de travail client et un serveur peuvent être résumés ci-après :

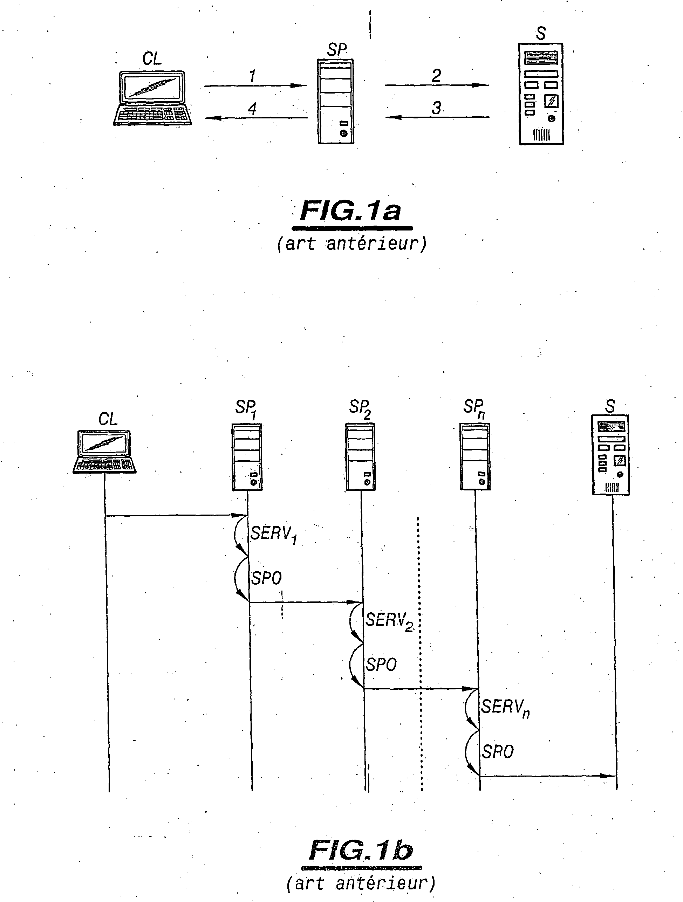

### 1) Service classique sans transparence, mode proxy. Figure 1a)

Cette mise en oeuvre classique du service se fait en configurant explicitement le poste de travail client, afin que toute requête d'accès au serveur transite par un serveur proxy intermédiaire exécutant le service.

Les adresses IP source et destination des différentes transactions ou étapes 1 à 4 sont données au tableau I ci-après :

**Tableau 1**

| Etape | IP source | IP destination |
|---|---|---|
| 1 | Client | Proxy |
| 2 | Proxy | Serveur |
| 3 | Serveur | Proxy |
| 4 | Proxy | Client |

Dans ce cas le service n'est transparent ni pour le poste de travail client, ni pour le serveur, car le poste de travail client transmet uniquement ses requêtes au serveur proxy et le serveur reçoit uniquement les requêtes en provenance du seul serveur proxy. Le serveur ne connaît donc jamais l'adresse IP source du poste de travail client.

### 2) Service transparent pour le poste de travail client

Selon cette mise en oeuvre, seule une partie du problème de la transparence de l'exécution du service est résolue, la transparence de l'exécution du service vis-à-vis du poste de travail client.

Les adresses IP source et destination des différentes transactions ou étapes 1 à 4 sont données au tableau II ci après :

**Tableau 2**

| Etape | IP source | IP destination |
|---|---|---|
| 1 | Client | Serveur |
| 2 | Proxy | Serveur |
| 3 | Serveur | Proxy |
| 4 | Serveur | Client |

Dans ce cas, les requêtes en provenance du poste de travail client sont redirigées de façon transparente vers le serveur proxy, lequel applique son traitement applicatif puis transmet la requête après traitement au serveur.

Présentant l'avantage de ne pas nécessiter de configuration explicite du poste de travail client, cette évolution est préconisée dans tout déploiement grand public, où les terminaux sont difficilement maîtrisables.

En revanche, le serveur ne connaît pas l'adresse IP source du poste de travail client, les requêtes et transactions provenant, pour ce dernier, du même serveur proxy fournisseur du service.

### 3) Service transparent pour le poste de travail client et le serveur

La technique actuelle permettant en outre de rendre un service transparent pour les serveurs est basée sur la mise en oeuvre d'un serveur proxy transparent vis-à-vis du poste de travail client, capable en outre de réutiliser l'adresse source IP client lorsqu'il interroge le serveur, transaction 2 figure 1a.

Une telle solution est appelée "proxy transparent avec spoofing" la notion de "spoofing" en langage anglo-saxon désignant la technique consistant à se faire passer pour quelqu'un d'autre sur le réseau en utilisant son adresse.

Les adresses IP source et destination des différentes transactions en étapes 1 à 4 sont données au tableau III ci-après :

**Tableau 3**

| Etape | IP source | IP destination |
|---|---|---|
| 1 | Client | Serveur |
| 2 | Client | Serveur |
| 3 | Serveur | Client |
| 4 | Serveur | Client |

Cette solution se caractérise par :
- l'absence de configuration du poste de travail client, les requêtes étant redirigées de façon transparente vers le serveur proxy ;
- la réutilisation de l'adresse IP source du poste de travail client (IP spoofing), le serveur proxy après traitement transmettant la requête au serveur en réutilisant comme adresse IP source celle du poste de travail client et non la sienne.

Bien que la solution précitée permette de n'introduire aucun effet sur l'architecture réseau existante, et qu'elle représente en théorie, pour cette raison, un système idéal pour l'introduction de services en coeur de réseau, elle présente toutefois de nombreux inconvénients et limitations qui en limitent actuellement très fortement l'utilisation.

Dans le cas d'un service unique :
- les serveurs proxy disposant de la fonction de réutilisation de l'adresse IP source du poste de travail client ("IP spoofing") sont rares. En conséquence une architecture mettant en oeuvre des serveurs proxy totalement transparents sera nécessairement limitée dans le choix de services et de fournisseurs/constructeurs gérant ces derniers ; les performances des serveurs proxy sont diminuées par l'appel de la fonction "IP spoofing". Le dimensionnement des services doit donc prendre en compte cette fonction afin de permettre des performances suffisantes.

Dans le cas de plusieurs services enchaînés ou successifs ou avec répartition de charge :
Tous les services mis en oeuvre dans l'architecture d'accès doivent mettre en oeuvre la fonction "IP-spoofing" successivement, au niveau de chacun des serveurs proxy successifs, ce qui en terme de temps de transmission global au moins apparaît très néfaste ;

Cette solution entraîne des difficultés majeures lorsque l'on fait appel à des mécanismes de répartition de charge, ayant pour objet de router différemment les paquets de données IP, afin de répartir la charge de trafic.

En effet, lors de la mise en oeuvre de cette solution, il est impératif pour une connexion donnée de faire transiter les paquets de données IP par les mêmes équipements, serveurs proxy, au trajet aller (client vers serveur) et au trajet retour (serveur vers client);

En effet, lorsque plusieurs serveurs proxy fournisseurs de service font appel à la fonction "IP spoofing", il n'est pas possible de retourner l'ordre de passage des paquets IP de façon dynamique, chaque service étant exécuté de manière totalement transparente. Un diagramme du mode opératoire selon la solution actuelle est illustré en figure 1b, dans laquelle la fonction "IP spoofing" est notée SPO.

Une architecture utilisant plusieurs serveurs proxy fournisseurs de services chaînés ou des mécanismes de répartition de charge doit donc s'appuyer sur un séquencement statique des services se basant sur l'adresse IP source du poste de travail client et du serveur (algorithmes de type hash-coding) afin de garantir que les paquets de données IP issus du poste de travail client et du serveur, pour un même poste de travail client, transitent bien par les mêmes serveurs proxy fournisseurs de services, entre le trajet aller et le trajet retour. Le document "Covalent Enterprise Ready Server Product Guide", Release 2.2 et publié en Juillet 2002 traite la possibilité de masquer l'adresse d'un serveur back-end pour les paquets qui transitent un proxy.

L'invention a pour objet de remédier aux inconvénients et limitations de la technique actuelle, lorsque celle-ci fait appel à la fonction "IP spoofing".

Dans ce but, le procédé de masquage des traitements applicatifs d'une requête d'accès à un serveur émise par l'intermédiaire d'un poste de travail client objet de l'invention s'applique lorsque le poste de travail client est connecté à ce serveur par l'intermédiaire de serveurs proxy successifs intermédiaires du réseau IP. Il est remarquable en ce qu'il consiste au moins, au niveau du premier serveur proxy atteint par cette requête d'accès, à appliquer le traitement applicatif supporté par ce premier serveur proxy à cette requête d'accès, insérer l'adresse IP du poste de travail client dans l'un des champs de données spécifiques de l'en-tête du message de requête d'accès, et au niveau des serveurs proxy successifs, transmettre successivement, en l'absence d'appel de la fonction "IP spoofing", la requête d'accès au serveur proxy suivant, en conservant l'adresse IP du poste de travail client dans l'en-tête du message de requête d'accès, pour exécuter le traitement applicatif fourni par chacun des serveurs proxy suivant, et, suite à l'exécution successive de chacun des traitements applicatifs et à la transmission de cette requête d'accès par le dernier des serveurs proxy intermédiaires successifs vers le serveur, au niveau d'un module de masquage interconnecté en coupure avec ce serveur, intercepter en coupure la requête d'accès, supprimer le champ spécifique de l'en-tête du message de requête pour masquer les traitements applicatifs fournis par les serveurs proxy intermédiaires successifs, reconstruire un message de requête masqué comportant comme adresse IP source l'adresse du poste de travail client et comme adresse IP destination l'adresse IP du serveur, transmettre, à partir du module de masquage, le message de requête masqué vers le serveur.

Ceci permet au serveur de traiter le message de requête masqué comme si ce dernier provenait directement du poste de travail client.

Le procédé objet de la présente invention, pour la transmission d'un message de réponse transparent à partir d'un serveur vers un poste de travail client, lorsque ce serveur a reçu un message de requête masqué, est remarquable en ce qu'il consiste, suite à la transmission d'un message de réponse spécifique à l'adresse de destination, adresse IP du poste de travail client, au niveau du module de masquage, à intercepter en coupure le message de réponse spécifique, extraire du message de réponse spécifique l'adresse de destination, adresse IP du poste de travail client, discriminer, à partir de l'adresse de destination, l'adresse IP source intermédiaire correspondant à l'adresse IP du dernier serveur proxy intermédiaire atteint par la requête, reconstruire, à partir de ce message de réponse spécifique, un message de réponse reconstruit comportant comme adresse de destination cette adresse IP source intermédiaire correspondant à l'adresse IP du dernier serveur proxy intermédiaire atteint par le message de requête, transmettre le message de réponse reconstruit du module de masquage vers le dernier serveur proxy intermédiaire, et, au niveau de ce dernier serveur proxy intermédiaire et des serveurs proxy intermédiaires successifs exécuter le traitement applicatif correspondant et transmettre successivement le message de réponse reconstruit au serveur précédent, et, suite à l'exécution successive de chacun des traitements applicatifs par chacun des serveurs proxy intermédiaires, au niveau du premier serveur proxy intermédiaire atteint par ce message de requête, reconstruire un message de réponse transparent en remplaçant, dans ce message de réponse reconstruit, l'adresse IP source intermédiaire, correspondant à celle du premier serveur proxy atteint par ce message de requête, par l'adresse IP source correspondant à celle du serveur, transmettre ce message de réponse transparent du premier serveur proxy vers le poste de travail client.

Ceci permet au poste de travail client de traiter ce message de réponse transparent comme si ce dernier provenait directement du serveur.

Le procédé et le système de masquage des traitements applicatifs d'une requête d'accès à un serveur, objets de la présente invention, trouvent application à la gestion des traitements applicatifs sur réseau IP en transparence pour les terminaux clients et/ou les serveurs.

Ils seront mieux compris à la lecture de la description ci-après et à l'observation des dessins dans lesquels, outre les figures 1a et 1b relatives à l'art antérieur,
- la figure 2a représente, à titre d'exemple non limitatif, un organigramme séquentiel des étapes successives de mise en oeuvre du procédé de masquage des traitements applicatifs, objet de la présente invention, permettant l'acheminement en transparence, vu du serveur, de toute requête d'accès à ce serveur.
- la figure 2b représente, à titre d'exemple non limitatif, un organigramme spécifique des étapes de mise en oeuvre d'une des étapes spécifiques du procédé objet de l'invention tel que représenté en figure 2a ;
- la figure 2c représente, à titre d'exemple non limitatif, un organigramme séquentiel des étapes successives de mise en oeuvre du procédé de masquage des traitements applicatifs, objet de la présente invention, permettant l'acheminement en transparence, vu du terminal client, de toute réponse spécifique transmise par un serveur à ce terminal client ;
- la figure 2d représente à titre illustratif un organigramme spécifique des étapes de mise en oeuvre d'une des étapes de mise en oeuvre du procédé objet de l'invention représenté en figure 2c ;
- la figure 2e représente, à titre illustratif, un diagramme spatio-temporel illustratif de la mise en oeuvre du procédé de masquage des traitements applicatifs en réseau IP, objet de l'invention, relativement à une requête d'accès respectivement une réponse à cette requête d'accès ;
- la figure 3 représente, à titre illustratif, un diagramme fonctionnel d'un module de masquage conforme à l'objet de la présente invention, destiné à être interconnecté en coupure relativement à tout message de requête d'accès respectivement tout message de réponse spécifique destiné à respectivement émanant d'un serveur de réseau IP.

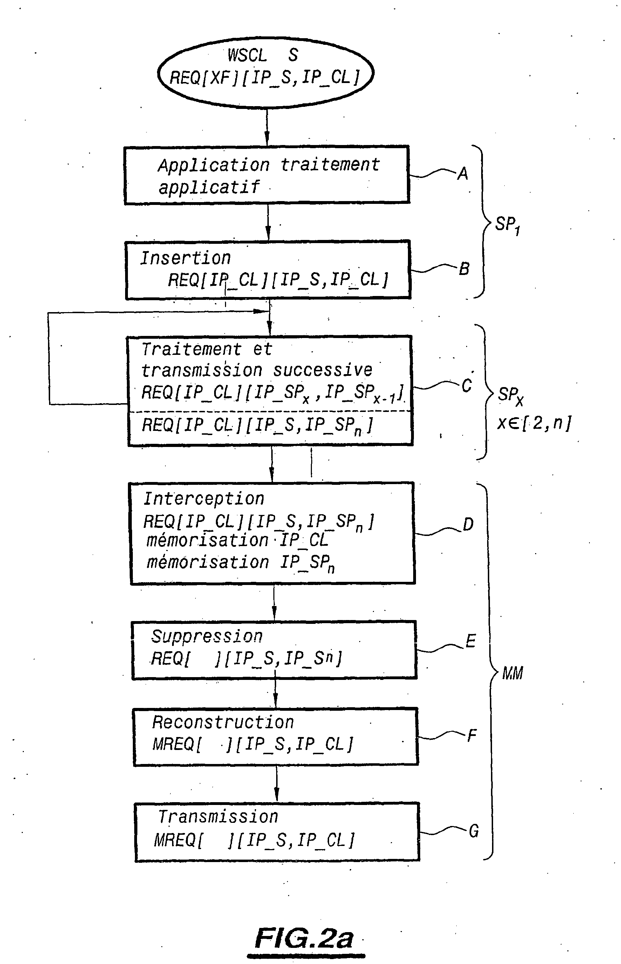

Une description plus détaillée du procédé de masquage des traitements applicatifs d'une requête d'accès à un serveur émise par un poste de travail client conforme à l'objet de la présente invention sera maintenant donnée en liaison avec les figures 2a à 2e.

En référence à la figure 2a on indique que le poste de travail client est noté WSCL, les serveurs proxy successifs sont notés SPₓ, x étant réputé désigner le rang des serveurs proxy successifs traversé par une requête d'accès au serveur S,x étant compris entre 1 et n par exemple.

D'une manière générale, le message de requête d'accès est noté :
- REQ [XF] [IP_S, IP_CL].

Dans le message de requête d'accès précité les champs de données représentés désignent :
XF l'adresse d'IP-spoofing, laquelle est normalement vide lors de l'émission de la requête d'accès par le terminal client WSCL,
IP_S désigne l'adresse IP de destination du message de requête c'est à dire l'adresse du serveur S,
IP_CL désigne l'adresse IP source c'est à dire l'adresse du terminal client émetteur de la requête.

Ainsi que représenté en figure 2a le procédé objet de l'invention consiste au niveau du premier serveur proxy SP₁, lequel doit être impérativement transparent pour le client, lorsque ce premier serveur proxy est atteint par le message de requête d'accès, à appliquer en une étape A le traitement applicatif fourni par le premier serveur proxy intermédiaire SP₁ à la requête d'accès précitée.

Il consiste en outre en une étape B à insérer l'adresse IP du poste de travail client dans l'un des champs de données spécifique de l'en-tête du message de requête d'accès.

En référence à la figure 2a suite à la mise en oeuvre de l'étape B le message de requête d'accès est alors :
REQ [IP_CL] [IP_SP, IP_CL]

Selon la notation précédente, on considère le message de requête précité après application du traitement applicatif considéré à l'étape A puis insertion de l'adresse IP du poste de travail client dans le champs de données spécifique de l'en-tête du message de requête d'accès constitué à titre d'exemple préférentiel non limitatif par le champs de données communément désigné "X-Forwarded-For" des messages de requête transmis par les terminaux clients dans les transactions clients/serveurs du procédé TCP IP.

D'une manière générale on indique que les étapes A et B de la figure 2a mises en oeuvre au niveau du premier serveur proxy intermédiaire SP₁ peuvent être interverties.

Le procédé objet de l'invention est ensuite poursuivi au niveau des serveurs proxy successifs notés SPₓ x appartenant à [2,n]. Les serveurs proxy SPₓ, (x différent de 1) peuvent être transparrents ou non pour le client.

Il consiste alors en une étape C à effectuer la transmission successive et bien entendu le traitement applicatif fourni par chacun des serveurs proxy successifs intermédiaires au message de requête, la transmission étant effectuée en l'absence d'appel de la fonction "IP spoofing", en conservant, bien entendu, l'adresse IP du poste de travail client dans l'en-tête du message de requête.

Sur la figure 2a la transmission successive et bien entendu les opérations de traitement appliquées au message de requête sont illustrées par la modification du message de requête lequel devient
REQ [IP_CL] [IP_SPₓ, IP_SPₓ₋₁]

On comprend ainsi que la transmission successive d'un des serveurs proxy intermédiaire au serveur proxy intermédiaire suivant est réalisée par la substitution des adresses IP destination et adresse IP source des serveurs proxy successifs conformément au processus de routage de paquets de données constitutifs du message de requête d'accès, cette substitution étant symbolisée par la boucle de retour à l'étape C de la figure 2a pour x appartenant à [2,n].

Bien entendu, lorsque les étapes A et B sont interverties, l'étape A d'application du traitement applicatif fourni par le premier serveur proxy SP₁ peut alors être directement intégrée à l'étape C par exemple, sans sortir du cadre de procédé de masquage objet de la présente invention.

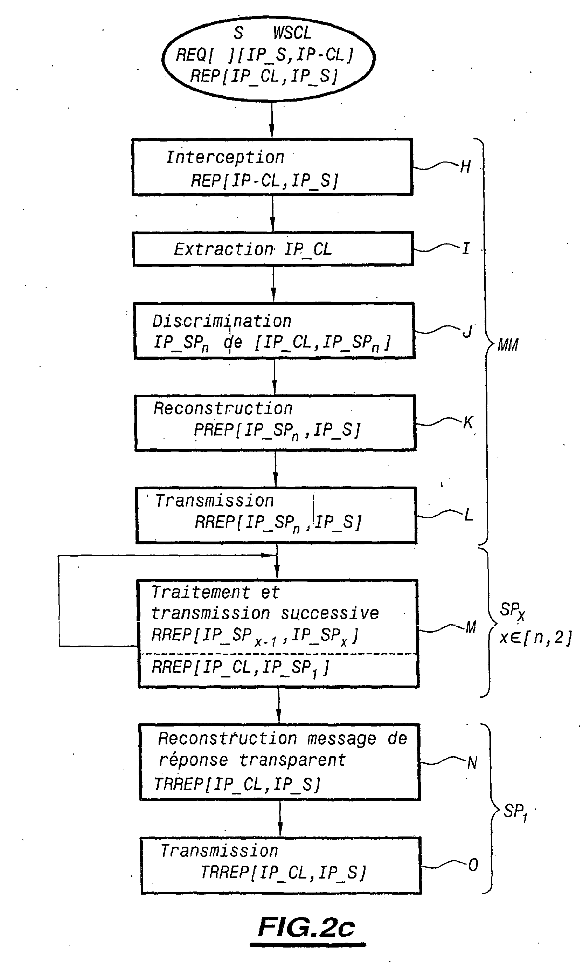

A la fin de l'étape C de la figure 2a, c'est-à-dire lorsque le message de requête a atteint le dernier serveur proxy de rang n, SPₙ, et suite à la mise en oeuvre du processus de routage classique et de transmission du message de requête par les serveurs proxy intermédiaires successifs, selon le processus de routage classique en l'absence d'appels de la fonction "IP spoofing", on dispose du message de requête préparé pour la transmission du dernier serveur proxy SPₙ vers le serveur S, ce message de requête d'accès étant de la forme :
REQ [IP_CL] [IP_S, IP_SPₙ]

Dans le message de requête d'accès précité, on indique que l'adresse IP de destination n'est autre que l'adresse du serveur IP_S et que l'adresse IP source est celle du dernier serveur proxy qui a appliqué le dernier traitement applicatif d'adresse IP_SPₙ.

Le dernier serveur proxy précité procède alors à la transmission du message de requête d'accès précité vers le serveur S.

Conformément à un aspect remarquable du procédé objet de la présente invention, on procède alors au niveau d'un module de masquage noté MM, interconnecté en coupure au serveur S, à une étape D consistant à intercepter en coupure la requête d'accès précitée.

L'étape D peut alors être suivie d'une étape E consistant à supprimer le champ spécifique de l'en-tête du message de requête d'accès, c'est-à-dire de supprimer du message de requête d'accès les données d'adresse IP_CL du poste de travail client. Cette opération permet de masquer les traitements applicatifs fournis par les serveurs proxy intermédiaires successifs. Bien entendu avant la suppression effective des données d'adresse précitées une mémorisation de l'adresse IP du poste de travail client peut être effectuée afin d'utilisation ultérieure de cette donnée d'adresse, ainsi qu'il sera décrit ultérieurement dans la description.

Suite à l'étape E le message de requête d'accès est de la forme
REQ[][IP_S, IP_Sₙ].

L'étape E peut alors être suivie d'une étape F consistant à reconstruire un message de requête d'accès masqué comportant comme adresse IP source l'adresse du poste de travail client, IP_CL, et comme adresse IP de destination l'adresse IP du serveur, l'adresse IP_S.

A l'issue de l'étape F, le message de requête d'accès modifié est de la forme
MREQ [ ][IP_S, IP_CL].

L'étape F peut alors être suivie d'une étape G consistant à transmettre à partir du module de masquage MM le message de requête d'accès masqué précité vers le serveur S.

Dans ces conditions, ceci permet au serveur S de traiter le message de requête masqué précédemment mentionné comme si ce dernier provenait directement du poste de travail client, car l'adresse IP source du message de requête modifié n'est autre que l'adresse IP_CL de ce dernier.

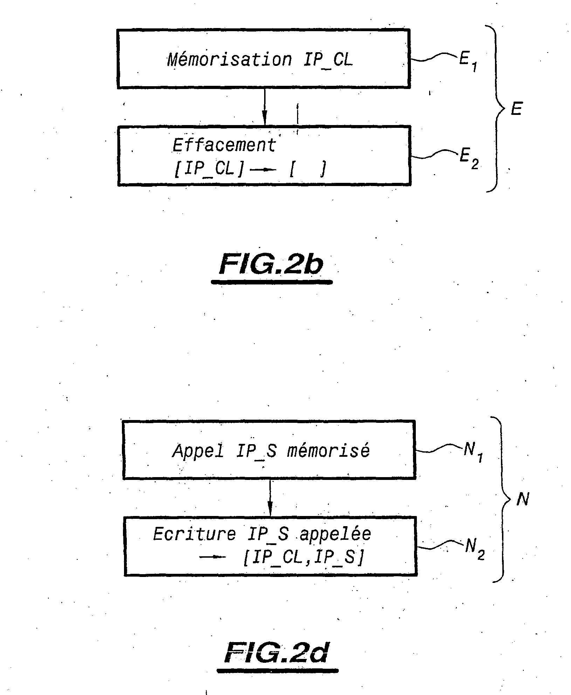

D'une manière générale, on indique que pour la mise en oeuvre de l'étape E représentée en figure 2a consistant à supprimer le champ spécifique de l'en-tête du message de requête, cette mise en oeuvre consiste avantageusement, ainsi que représenté en figure 2b, à mémoriser en une étape E1 l'adresse IP du poste du travail client à partir du champ spécifique de l'en-tête du message de requête et à effacer dans une étape E₂ les données d'adresses IP du poste de travail client dans le champ spécifique de l'en-tête du message de requête c'est-à-dire dans le champ désigné "X- Forwarded-For". Bien entendu le procédé objet de la présente invention n'est pas limité aux étapes représentées en figure 2a et 2b. A titre d'exemple non limitatif on indique qu'à l'étape D, suite à l'interception du message de requête d'accès, le procédé objet de l'invention peut consister à effectuer une mémorisation de l'adresse du poste de travail client IP_CL contenue dans le champs "X-Forwarded-For", c'est-à-dire en fait l'étape E1 représentée en figure 2b, ainsi qu'une mémorisation de l'adresse IP source contenue dans le message de requête après interception, c'est-à-dire de l'adresse IP_SPₙ du dernier serveur proxy qui a appliqué le dernier traitement applicatif au message de requête précité.

La mémorisation des deux adresses précitées IP_CL et IP_SPₙ peut alors permettre de constituer une structure de données, telle qu'une liste ou un tableau ou analogue, permettant de mettre en correspondance biunivoque les deux adresses précitées pour utilisation ultérieure dans le cadre de la transmission d'un message de réponse transmis du serveur S vers le terminal client, ainsi qu'il sera décrit ultérieurement dans la description.

D'une manière générale, on indique que le procédé objet de la présente invention tel que représenté en liaison avec les figures 2a et 2b permet ainsi d'assurer par la technique de masquage une mise en oeuvre d'une transparence, vue du côté serveur, des opérations de traitement applicatif mises en oeuvre par les équipements de service intégrés à chacun des serveurs proxy successifs intermédiaires.

La séparation des fonctionnalités précitées permet :
- d'agrandir l'offre de service disponible dans le cas d'une mise en oeuvre d'architecture de service transparente ;
- de faciliter le dimensionnement d'une architecture, car les fonctionnalités offertes par les services applicatifs sont séparées de l'équipement permettant la transparence et il est alors possible de dimensionner chaque service ou traitement applicatif en fonction de ses performances intrinsèques ;
- de simplifier les règles d'ingénierie en ne masquant les traitements qu'après passage par l'ensemble des services, un tel mode opératoire permettant de mettre en oeuvre facilement des mécanismes de répartition de charge sur la plate-forme de service correspondante.

Le procédé objet de la présente invention permet également la mise en oeuvre d'un processus de masquage des traitements applicatifs exécutés par les différents serveurs proxy intermédiaires successifs lors de la transmission d'un message de réponse transmis par le serveur S au poste de travail client WSCL, pour assurer la mise en oeuvre d'une transparence vue côté client.

Toutefois, d'une manière générale, les messages de réponse transmis par les serveurs sur le réseau IP à tout poste de travail client ayant transmis une requête d'accès à ce dernier ne comportent pas de champ intermédiaire d'en-tête spécifique, tel que le champ de données "X-Forwarded-For". Dans ces conditions, et selon un aspect remarquable du procédé objet de l'invention, la transparence de l'application des traitements applicatifs ou services vue du côté client est assurée, en l'absence de ce champ intermédiaire, par le seul premier serveur proxy SP₁ atteint par le message de requête envoyé par le poste de travail client WSCL, ainsi qu'il sera décrit ci-après en liaison avec la figure 2c.

En référence à la figure pré-citée, on considère un serveur S lequel a reçu un message de requête tel que le message de requête modifié transmis à l'étape G de la figure 2a vers ce serveur.

Suite à la réception de ce message de requête modifié le serveur S transmet une réponse spécifique de la forme
REP[IP_CL, IP_S].

Par message de réponse spécifique, on comprend bien entendu que le message de réponse précité est spécifique aux conditions d'accès et aux informations requises par le message de requête d'accès, tel que le message de requête d'accès modifié précédemment cité, indépendamment de la nature des données transmises et de l'habilitation et des degrés d'habilitation éventuels de l'utilisateur et du poste de travail client à l'accession aux bases de données du serveur S considéré.

En référence à la figure 2c, on comprend en particulier que le message de réponse précité comporte essentiellement une adresse IP destination formée par l'adresse IP client IP_CL du poste de travail client WSCL, et, bien entendu, une adresse IP source qui n'est autre que l'adresse IP_S du serveur S.

Dans ces conditions, le procédé objet de la présente invention pour l'acheminement d'un message de réponse masqué consiste, suite à la transmission du message de réponse spécifique pré-cité à l'adresse de destination du poste de travail client, au niveau d'un module de masquage MM à intercepter en coupure, dans une étape H, le message de réponse spécifique REP [IP_CL, IP_S].

L'étape H est alors suivie de l'étape I consistant à extraire, du message de réponse spécifique intercepté, l'adresse IP de destination, c'est-à-dire l'adresse IP_CL du poste de travail client.

L'étape I est elle-même suivie d'une étape J consistant à discriminer, à partir de l'adresse IP de destination, l'adresse IP source intermédiaire correspondant à l'adresse IP du dernier serveur proxy intermédiaire atteint par le message de requête d'accès, c'est-à-dire le dernier serveur proxy intermédiaire d'adresse IP_SPₙ.

On comprend que, dans ce but, il est avantageux de faire appel à la structure de données obtenue à l'étape D de la figure 2a, grâce à la mise en correspondance bi-univoque des adresses IP de destination, IP_CL et de l'adresse du dernier serveur proxy atteint par le message de requête, IP_SPₙ.

L'étape J est alors suivie d'une étape K consistant à reconstruire à partir du message de réponse spécifique, un message de réponse reconstruit comportant comme adresse de destination l'adresse IP source intermédiaire correspondant à l'adresse IP du dernier serveur proxy intermédiaire atteint par le message de requête d'accès, c'est-à-dire l'adresse IP_SPₙ. L'adresse IP source c'est-à-dire l'adresse IP_S peut être maintenue.

A la fin de la mise en oeuvre de l'étape K le message de réponse reconstruit est de la forme
RREP [IP_SPₙ, IP_S].

L'étape K peut alors être suivie d'une étape L consistant à transmettre le message de réponse reconstruit pré-cité du module de masquage MM vers le dernier serveur proxy intermédiaire d'adresse IP_FPₙ. Le procédé objet de la présente invention pour l'acheminement d'un message de réponse consiste alors, ainsi que représenté en figure 2c, au niveau du dernier serveur proxy intermédiaire et des serveurs proxy intermédiaires successifs notés SPₓ, x appartenant à [n,2], à exécuter en une étape M le traitement applicatif correspondant et à transmettre successivement le message de réponse reconstruit au serveur proxy précédant.

L'ensemble des opérations exécutées à l'étape M est représenté par le message de réponse reconstruit de la forme
RREP[IP_SPₓ₋₁, IP_SPₓ] avec x appartenant à [n,2] et par la boucle de retour illustrant l'exécution de chaque traitement applicatif, puis la transmission au niveau de chaque serveur proxy précédant, de rang décroissant n à 2, dans le sens contraire de progression du message de requête d'accès au serveur.

A la fin de l'étape M, sur la figure 2c, on dispose au niveau du premier serveur proxy SP₁ atteint par le message de requête d'accès au serveur S d'un message de réponse reconstruit de la forme
RREP[IP_CL, IP_SP₁] susceptible d'être retransmis au poste de travail client WSCL d'adresse IP destination IP_CL.

Conformément à un aspect remarquable du procédé objet de la présente invention, l'étape M est alors suivie, au niveau du premier serveur proxy intermédiaire SP₁ atteint par le message de requête d'accès, d'une étape N de reconstruction d'un message de réponse transparent obtenu en remplaçant, dans le message de réponse reconstruit, l'adresse IP source intermédiaire correspondant à celle du premier serveur proxy atteint par le message de requête d'accès au serveur S par l'adresse IP source correspondant à celle du serveur S, l'adresse IP_S.

Suite à la mise en oeuvre de l'étape N le message de réponse transparent est de la forme
TRREP[IP_CL, IP_S].

L'étape N peut alors être suivie d'une étape O consistant à transmettre le message de réponse transparent précité, du premier serveur proxy SP₁ vers le poste de travail client WSCL, à l'adresse IP de destination IP_CL.

Ce mode opératoire permet ainsi, grâce au procédé objet de la présente invention pour l'acheminement d'un message de réponse, au poste de travail client WCSL de traiter le message de réponse transparent précité comme si ce dernier provenait directement du serveur S.

Pour assurer la mise en oeuvre de l'étape N du procédé objet de l'invention tel que représenté en figure 2c un mode opératoire spécifique sera maintenant décrit en liaison avec la figure 2d. En référence à la figure précitée l'étape N consistant à reconstruire un message de réponse transparent peut avantageusement consister, en une étape N₁, à appeler en lecture l'adresse IP destinataire du message de requête d'accès mémorisé préalablement, lors de la transmission de ce message de requête d'accès au niveau du premier serveur proxy SP₁ atteint par le message de requête d'accès précité.

D'une manière générale, on indique que la mémorisation de l'adresse IP destination c'est-à-dire l'adresse du serveur S, IP_S, au niveau du premier serveur proxy SP₁, lors de la transmission du message de requête d'accès, ne nécessite pas d'opération de mémorisation spécifique au procédé objet de la présente invention mis en oeuvre pour l'acheminement d'un message de requête d'accès masqué. Une telle opération de mémorisation est effectuée systématiquement et automatiquement au niveau du serveur proxy SP₁, du fait de la mise en oeuvre des opérations de routage en mode transparent pour le client du serveur proxy SP₁, l'appel de l'adresse IP_S mémorisé pouvant être alors simplement effectué à partir de l'adresse de mémorisation de cette donnée.

L'étape N₁ peut alors être suivie d'une étape N₂ d'écriture de l'adresse IP_S appelée en lieu et place de l'adresse IP source intermédiaire, c'est-à-dire l'adresse IP_SP₁ du message de réponse reconstruit obtenu à la fin de l'étape M et représenté en figure 2c, pour ainsi constituer l'adresse IP source correspondant à celle du serveur S.

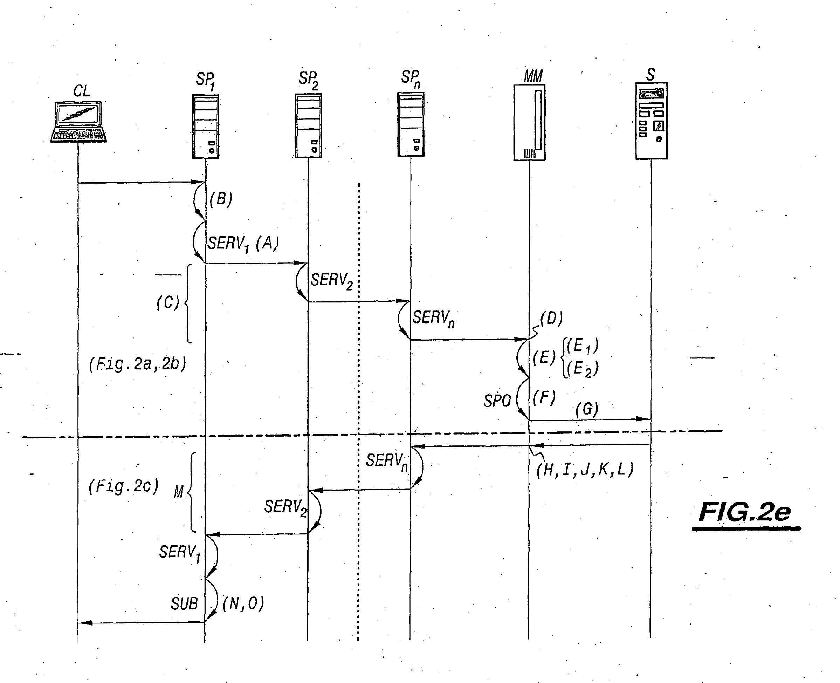

Un diagramme spatio-temporel illustratif de la mise en oeuvre du procédé objet de la présente invention tant pour l'acheminement d'un message de requête d'accès d'un poste de travail client vers un serveur S que pour l'acheminement d'un message de réponse de ce serveur S à ce poste de travail client est décrit en liaison avec la figure 2e.

La partie supérieure de la figure 2e représente l'acheminement d'une requête, les traitements applicatifs désignés SERV₁, SERV₂ et SERVₙ étant appliqués à la transmission de la requête au niveau des serveurs proxy successifs SP₁, SP₂ et SPₙ.

Les étapes de mise en oeuvre du procédé objet de l'invention tel que représentées en figure 2a sont référencées sur la partie supérieure de la figure 2e.

En ce qui concerne l'acheminement de la réponse conformément au procédé objet de la présente invention, le processus correspondant est représenté en partie inférieure de la figure 2e, les étapes de la figure 2c étant représentées et référencées également sur cette partie.

En comparaison du diagramme spatio-temporel représenté en figure 1b, on remarquera que l'appel de la fonction "IP spoofing" est sensiblement supprimé conformément à l'objet de la présente invention pour la transmission successive de l'un des serveurs proxy intermédiaire au serveur proxy intermédiaire suivant.

Par contre, l'appel de la fonction "IP spoofing" est effectué au niveau du module de masquage MM étape F, pour la transmission au serveur S.

On comprend ainsi que les règles d'ingénierie et de mise en oeuvre des différents traitements applicatifs en l'absence d'appels de la fonction "IP spoofing" sont simplifiées, ainsi que mentionné précédemment dans la description. En outre les mécanismes de répartition de charge peuvent alors être mis en oeuvre indépendamment pour chacun des serveurs proxy intermédiaires précités.

Enfin, en ce qui concerne le processus d'acheminement de la réponse représenté en figure 2e, on indique que bien que l'appel de la fonction "IP spoofing" ne soit pas envisageable en raison de la structure même des messages de réponse engendrés par les serveurs, la mise en oeuvre de la substitution, notée SUB, par remplacement dans le message de réponse reconstruit, de l'adresse IP source intermédiaire correspondant à celle du premier serveur proxy SP₁, adresse IP_SP₁, par l'adresse IP source correspondant à celle du serveur, l'adresse IP_S réalisée par l'étape N de la figure 2c, permet, de manière sensiblement équivalente à celle de l'appel de la fonction "IP spoofing", d'assurer la transparence des traitements applicatifs vus du poste de travail client WSCL.

Enfin, en référence à la figure 2e, on indique que les différents serveurs proxy opèrent en mode transparent pour le client pour ce qui concerne le premier serveur proxy SP₁, alors que les différents serveurs proxy transparents successifs SP₂ à SPₙ peuvent opérer ou non en mode transparent pour le client, l'absence de transparence, pour ce dernier, correspondant à un mode de fonctionnement proxy dans lequel l'adresse IP source, pour assurer la transmission de l'un des serveurs proxy au serveur proxy suivant, correspond effectivement à l'adresse IP du serveur proxy considéré.

Ce mode opératoire est illustré à l'étape C de la figure 2a respectivement à l'étape M de la figure 2c.

Enfin, on indique que, pour ce qui concerne la mise en oeuvre des étapes de reconstruction du message masqué à l'étape F de la figure 2a respectivement à l'étape N, pour la reconstruction du message de réponse transparent de la figure 2c, les opérations de reconstruction sont effectuées sur les paquets de données IP successifs assurant le transport effectif du message de requête d'accès respectivement du message de réponse, conformément au protocole TCP/UDP IP, l'invention pouvant être mise en oeuvre dans le cadre de ces deux protocoles.

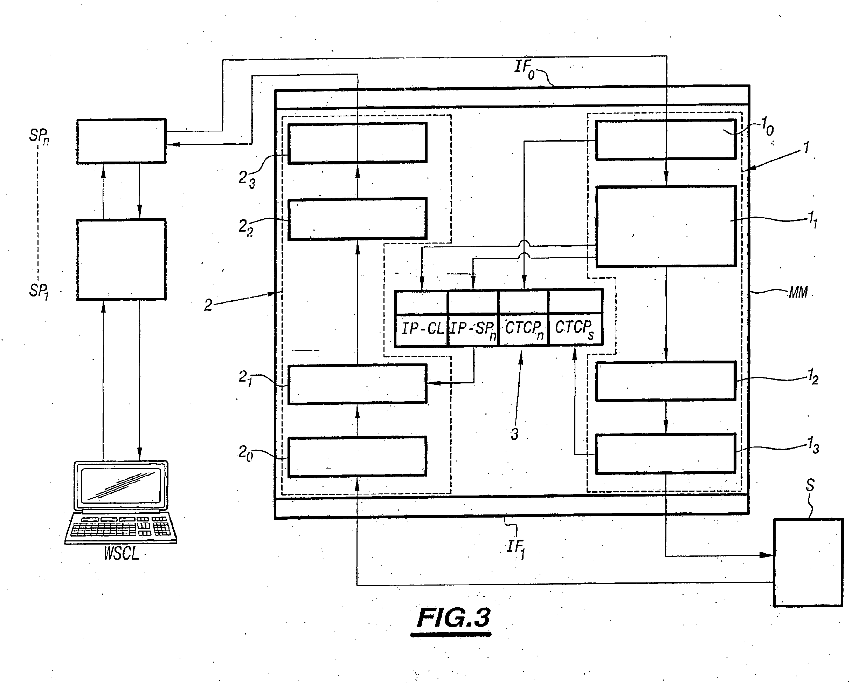

Une description plus détaillée d'un module de masquage de traitement applicatif d'une requête d'accès émise par un poste de travail client connecté à un serveur, par l'intermédiaire de serveurs proxy successifs intermédiaires du réseau IP, respectivement d'une réponse émise par ce serveur à destination de ce terminal client sera maintenant donnée en liaison avec la figure 3.

Ainsi que représenté sur la figure 3, le module de masquage MM objet de l'invention comporte au moins une première voie d'interception en coupure du message de requête d'accès, cette voie étant notée 1 sur la figure 3a. La première voie d'interception en coupure 1 permet d'engendrer, à partir de la requête d'accès, un message de requête masqué comportant une adresse IP source, c'est-à-dire l'adresse du poste de travail client, et comme adresse de destination l'adresse IP du serveur, adresse IP_S, ainsi que décrit précédemment dans la description en liaison avec les étapes D, E, F, G de la figure 2a.

Le module de masquage MM objet de l'invention comporte en outre une deuxième voie d'interception en coupure d'un message de réponse spécifique transmis par le serveur en réponse au message de requête masqué précité. La deuxième voie est notée 2 sur la figure 3. Cette deuxième voie permet, à partir du message de réponse spécifique, d'engendrer un message de réponse reconstruit, ainsi que décrit précédemment dans la description relativement au procédé objet de la présente invention et, en particulier des étapes H, I, J, K, L représentées en figure 2c.

En outre, le module de masquage objet de l'invention comporte un module 3 de mémorisation accessible en écriture/lecture par la première respectivement par la deuxième voie d'interception en coupure.

Le module 3 de mémorisation permet au moins, sur interception de la requête d'accès, de mémoriser l'adresse IP du poste de travail client, à partir d'un champ spécifique de l'entête du message de requête d'accès et l'adresse IP du dernier serveur proxy intermédiaire SPₙ : IP_SPₙ de ce message de requête d'accès.

Il permet en outre, sur interception d'un message de réponse spécifique, d'extraire l'adresse IP du dernier serveur proxy intermédiaire SPₙ, atteint par le message de requête d'accès ainsi que le port de traitement applicatif fourni par le serveur proxy SPₙ précité.

Selon un mode de mise en oeuvre non limitatif représenté en figure 3, la première voie d'interception en coupure 1 comporte au moins connecté en cascade un module proxy HTTP, noté 1₀, recevant le message de requête d'accès. Ce module proxy HTTP 1₀ dispose de ressources pour analyser chaque paquet de données reçu constitutif du message de requête d'accès au niveau du processus applicatif, c'est-à-dire du dernier traitement applicatif mis en oeuvre par le dernier serveur proxy SPₙ par exemple.

Le module proxy HTTP 1₀ permet par exemple d'analyser les paramètres de connexion TCP IP du module de masquage MM au dernier serveur proxy SPₙ concerné.

La voie d'interception en coupure 1 comporte en outre un module 1₁ d'extraction et de recopie d'adresse IP du poste de travail client, c'est-à-dire l'adresse IP_CL à partir du champ de données spécifique, le champ "X-Forwarded-For" de l'entête du message de requête d'accès. Le module de recopie 1₁ permet également d'effacer le champ de données spécifique conformément aux étapes E₁ et E₂ représentées en figure 2b par exemple. Il permet également d'assurer la mémorisation de l'adresse IP source intermédiaire IP_SPₙ correspondant à celle du serveur proxy atteint en dernier par le message de requête d'accès, ainsi que décrit à l'étape D de la figure 2a par exemple.

La première voie 1 d'interception en coupure comporte également ensuite un module 1₂ générateur de paquets de données IP. Le module 1₂ générateur de paquets IP permet d'assurer le remplacement de l'adresse IP source intermédiaire, c'est-à-dire celle du serveur proxy dernièrement atteint par le message de requête d'accès, le serveur proxy SPₙ, par l'adresse IP contenue dans le champ de données spécifique de l'entête du message de requête, c'est-à-dire par l'adresse IP du poste de travail client, l'adresse IP_CL.

Enfin, la première voie 1 d'interception en coupure comporte enfin un module 1₃ émetteur de paquets de données IP.

En ce qui concerne la deuxième voie 2 d'interception en coupure, celle-ci comporte un module 2₀ proxy HTTP transparent recevant le message de réponse spécifique engendré par le serveur S, un module 2₁ de récupération de l'adresse IP du dernier serveur proxy intermédiaire atteint par le message de requête d'accès SPₙ et du port de traitement applicatif fourni par le dernier serveur proxy intermédiaire précité.

Le module 2₁ précité est alors suivi d'un module 2₂ générateur de paquets de données IP permettant de mettre en oeuvre l'étape K de la figure 2c et d'établir le message de réponse reconstruit correspondant.

Le module 2₂ est alors suivi d'un module 2₃ d'émission des paquets IP précités à destination du dernier serveur proxy atteint par le message de requête d'accès à l'adresse IP de destination IP_SPₙ du serveur proxy SPₙ.

Le module 2₂ générateur de paquets IP permet de remplacer l'adresse IP de destination, c'est-à-dire l'adresse du poste de travail client IP_CL, par celle du serveur proxy SPₙ.

Le mode de fonctionnement de l'ensemble du module de masquage MM représenté en figure 3 sera maintenant décrit ci-après.

Sur interception d'un message de requête d'accès par la première voie d'interception 1, le module 3 de mémorisation accessible en écriture/lecture joue le rôle d'une base de correspondance stockant l'adresse IP du service, c'est-à-dire du traitement applicatif mis en oeuvre par le dernier serveur proxy SPn associée à l'adresse IP du poste de travail client adresse IP_CL, conformément à l'étape D de la figure 2a.

La base de correspondance précitée permet de s'assurer qu'un traitement applicatif ou service fourni par le dernier serveur proxy traitant les paquets de données constitutives de ce message de requête d'accès reçoit bien la réponse correspondante du serveur.

La base de correspondance précitée assure également la corrélation entre la connection TCP établie entre le dernier serveur proxy SPn et le module de masquage MM et entre la connexion TCP établie entre le module de masquage MM et le serveur S.

Sur la figure 3, les références indiquées ci-dessous désignent :
- CTCPₛ : les paramètres de connexion TCP du module de masquage MM au serveur S ;
- CTCPₙ désigne les paramètres de connexion TCP du module de masquage MM au dernier serveur proxy SPₙ.

On comprend, en particulier, que ces paramètres sont mémorisés dans la base de correspondance 3 par l'intermédiaire du module proxy HTTP 1₀ respectivement de l'émetteur de paquets IP 1₃.

Bien entendu, l'interconnexion entre le module de masquage MM et le serveur S respectivement le serveur proxy SPₙ est réalisée par l'intermédiaire d'une interface de service notée IF₀ respectivement d'une interface serveur notée IF₁.

Le séquencement du mode opératoire du module de masquage MM objet de la présente invention, c'est-à-dire la gestion de l'ensemble des modules constitutifs de la première chaîne d'interception 1, de la deuxième chaîne d'interception 2 et du module de mémorisation 3 accessible en écriture/lecture jouant le rôle de base de connaissances, est réalisée par l'intermédiaire d'un micro-processeur et d'une mémoire de travail non représentés aux dessins.

Enfin, on indique que le module de masquage MM peut également être mis en oeuvre sous la forme d'un ordinateur permettant la mise en oeuvre d'une couche de communication avec un serveur proxy et des serveurs au travers du procédé HTTP et un mécanisme permettant de recevoir les requêtes en provenance des serveurs proxy, de remplacer l'adresse IP du serveur proxy contenu dans ces requêtes par celles du terminal de travail client, de transmettre les requêtes modifiées au serveur concerné, de recevoir les réponses en provenance de ces serveurs, de rétablir l'adresse IP des serveurs proxy concernés en lieu et place de l'adresse IP des stations de travail destinataires et de transmettre les réponses modifiées au serveur proxy considéré.

Le procédé objet de la présente invention et le module de masquage correspondant peuvent être mis en oeuvre sur tous les protocoles applicatifs prévoyant leur mode d'exécution, l'insertion de l'adresse IP du terminal de travail client au niveau applicatif.

Lorsque le protocole applicatif est un protocole du type HTTP, les serveurs proxy HTTP permettent d'effectuer l'insertion dans les entêtes des messages de requête qu'ils reçoivent, l'adresse IP du poste de travail client à l'origine de cette requête d'accès.

Dans le cas où le procédé utilisé ne permet pas de définir un moyen d'insérer l'adresse du poste de travail client au sein du flux de données transmis conformément à ce procédé, il est alors envisageable de modifier superficiellement le premier serveur proxy SP₁, afin que ce dernier soit en mesure d'insérer l'adresse IP du poste de travail client dans un champ de données propriétaire transmis dans le flux.

## Revendications

1. Procédé de masquage des traitements applicatifs d'une requête d'accès à un serveur émise par un poste de travail client connecté à ce serveur par l'intermédiaire de serveurs proxy successifs intermédiaires du réseau conforme au protocole Internet, IP, **caractérisé en ce qu'**il consiste au moins à :
au niveau du premier serveur proxy atteint par le message de requête d'accès,
a) appliquer un traitement applicatif fourni par ledit premier serveur proxy intermédiaire à ladite requête d'accès.
b) insérer l'adresse IP du poste de travail client dans l'un des champs de données spécifiques de l'entête dudit message de requête d'accès ; et au niveau desdits serveurs proxy successifs,
c) transmettre successivement la requête d'accès au serveur proxy suivant, en utilisant comme adresse IP source de la requête transmise, l'adresse IP du serveur proxy considéré, et en conservant l'adresse IP du poste de travail client dans l'entête dudit message de requête, ledit serveur proxy suivant exécutant un traitement applicatif qu'il fournit, et, suite à l'exécution successive des traitements applicatifs et à la transmission de ladite requête d'accès par le dernier desdits serveurs proxy intermédiaires successifs vers ledit serveur,
au niveau d'un module de masquage interconnecté en coupure audit serveur,
d) intercepter en coupure ladite requête d'accès ;
e) supprimer l'adresse insérée dans celui desdits champs spécifiques de l'entête dudit message de requête d'accès;
f) construire à partir du message de requête d'accès obtenu à l'étape précédente un message de requête masqué comportant comme adresse IP source l'adresse du poste de travail client et comme adresse IP de destination l'adresse IP dudit serveur ;
g) transmettre à partir dudit module de masquage ledit message de requête masqué vers ledit serveur, ce qui permet audit serveur de traiter ledit message de requête masqué comme si ce dernier provenait directement du poste de travail client.

2. Procédé selon la revendication 1, **caractérisé en ce que** ladite étape consistant à supprimer ledit champ spécifique de l'entête dudit message de requête consiste à :
e1) mémoriser l'adresse IP du poste de travail client à partir dudit champ spécifique de l'entête dudit message de requête ;
e2) effacer les données d'adresse IP du poste de travail client dans ledit champ spécifique de l'entête dudit message de requête.

3. Procédé selon l'une des revendications 1 ou 2, **caractérisé en ce que** celui-ci comporte en outre, suite à l'étape consistant à intercepter en coupure, une étape consistant à mémoriser l'adresse IP source intermédiaire de ladite requête correspondant à l'adresse IP dudit dernier serveur proxy intermédiaire.

4. Procédé de transmission d'un message de réponse transparent à partir d'un serveur conforme au protocole Internet vers un poste de travail client, lorsque ce serveur a reçu de ce poste de travail client un message de requête d'accès masqué à ce serveur, ledit message de requête d'accès ayant été fourni au serveur selon un procédé de masquage des traitements applicatifs d'une requête d'accès au serveur émise par le poste de travail client connecté à ce serveur par l'intermédiaire de serveurs proxy successifs intermédiaires d'un réseau conforme au protocole Internet, dit réseau IP, le procédé de masquage consistant au moins à :
a) appliquer un traitement applicatif fourni par ledit premier serveur proxy intermédiaire à ladite requête d'accès,
b) insérer l'adresse IP du poste de travail client dans l'un des champs de données spécifiques de l'entête dudit message de requête d'accès ; et au niveau desdits serveurs proxy successifs,
c) transmettre successivement la requête d'accès au serveur proxy suivant, en utilisant comme adresse IP source de la requête transmise l'adresse IP du serveur proxy considéré, et en conservant l'adresse IP du poste de travail client dans l'entête dudit message de requête, ledit serveur proxy suivant exécutant un traitement applicatif qu'il fournit, et, suite à l'exécution successive des traitements applicatifs et à la transmission de ladite requête d'accès par le dernier desdits serveurs proxy intermédiaires successifs vers ledit serveur,
au niveau d'un module de masquage interconnecté en coupure audit serveur,
d) intercepter en coupure ladite requête d'accès ;
e) supprimer l'adresse insérée dans celui desdits champs spécifiques de l'entête dudit message de requête d'accès;
f) construire à partir du message de requête d'accès obtenu à l'étape précédente un message de requête masqué comportant comme adresse IP source l'adresse du poste de travail client et comme adresse IP de destination l'adresse IP dudit serveur ;
g) transmettre à partir dudit module de masquage ledit message de requête masqué vers ledit serveur, ce qui permet audit serveur de traiter ledit message de requête masqué comme si ce dernier provenait directement du poste de travail client le procédé de transmission d'un message de réponse transparent étant **caractérisé en ce que** celui-ci consiste, suite à la transmission d'un message de réponse spécifique à l'adresse de destination, adresse IP dudit poste de travail client,
au niveau d'un module de masquage, à :
h) intercepter en coupure ledit message de réponse spécifique ;
i) extraire, dudit message de réponse spécifique, ladite adresse de destination, adresse IP dudit poste de travail client ;
j) discriminer, à partir de ladite adresse de destination, l'adresse dans le réseau IP source intermédiaire correspondant à l'adresse IP dudit dernier serveur proxy intermédiaire atteint par ledit message de requête d'accès ;
k) construire, à partir dudit message de réponse spécifique, un message de réponse reconstruit comportant comme adresse de destination ladite adresse IP source intermédiaire correspondant à l'adresse IP dudit dernier serveur proxy intermédiaire atteint par ledit message de requête d'accès ;
i) transmettre ledit message de réponse reconstruit du module de masquage vers ledit dernier serveur proxy intermédiaire, et
au niveau dudit dernier serveur proxy intermédiaire et des serveurs proxy intermédiaires successifs, à :
m) exécuter le traitement applicatif correspondant et transmettre successivement le message. de réponse reconstruit au serveur proxy précédent, et, suite à l'exécution successive de chacun des traitements applicatifs par chacun desdits serveurs proxy intermédiaires,
au niveau dudit premier serveur proxy intermédiaire atteint par ledit message de requête d'accès, à :
n) construire un message de réponse transparent en remplaçant, dans ledit message de réponse reconstruit, l'adresse IP source intermédiaire correspondant à celle dudit premier serveur proxy atteint par ledit message de requête par l'adresse IP source correspondant à celle du serveur.
o) transmettre ledit message de réponse transparent dudit premier serveur proxy vers ledit poste de travail client, ce qui permet audit poste de travail client de traiter ledit message de réponse transparent comme si ce dernier provenait directement dudit serveur.

5. Procédé selon la revendication 4, **caractérisé en ce que** celui-ci consiste, pour la mise en oeuvre de l'étape n) consistant à construire un message de réponse transparent, celle-ci consiste :
n1) à appeler en lecture l'adresse IP destinataire du message de requête d'accès mémorisée préalablement lors de la transmission de ce message de requête d'accès au niveau du premier serveur proxy atteint par ce message de requête d'accès, et
n2) à écrire l'adresse IP destinataire appelée en lieu et place de l'adresse IP source intermédiaire, pour constituer l'adresse dans le réseau IP source correspondant à celle du serveur.

6. Module de masquage de traitements applicatifs d'une requête d'accès émise par un poste de travail client connecté à un serveur par l'intermédiaire de serveurs proxy successifs intermédiaires dans un réseau conforme au protocole Internet, IP, et d'une réponse émise par ce serveur vers ce poste de travail client, **caractérisé en ce qu'**il comporte au moins ;
- des premiers moyens d'interception configurés pour intercepter en coupure le message de requête d'accès et pour engendrer à partir de ladite requête d'accès un message de requête masqué comportant comme adresse IP source l'adresse du poste de travail client et comme adresse de destination l'adresse IP du serveur ;
- des deuxièmes moyens d'interception configurés pour intercepter en coupure un message de réponse spécifique transmis par ledit serveur en réponse au message de requête masqué, et pour engendrer à partir de ce message de réponse spécifique un message de réponse reconstruit ;
- un module de mémorisation accessible en écriture par les premiers moyens d'interception et en lecture par les deuxièmes moyens d'interception et permettant au moins :
sur interception d'une requête d'accès, de mémoriser l'adresse IP du poste de travail client à partir d'un champ spécifique de l'entête dudit message de requête d'accès et l'adresse IP du dernier serveur proxy intermédiaire atteint par ledit message de requête d'accès, et
sur interception d'un message de réponse spécifique, d'extraire l'adresse IP du dernier serveur proxy intermédiaire atteint par le message de requête d'accès et du port de traitement applicatif fourni par ledit serveur proxy.

7. Module de masquage selon la revendication 6, **caractérisé en ce que** les premiers moyens d'interception comporte au moins, connectés en cascade :
- un module proxy recevant ledit message de requête d'accès ;
- un module de recopie d'adresse IP dudit poste de travail client à partir du champ de données spécifique de l'entête de ce message de requête d'accès et d'effacement d'une adresse IP dudit champ de données spécifique ;
- un module générateur de paquets de données conforme au protocole Internet permettant de construire le message de requête masqué comportant comme adresse IP source l'adresse IP du poste de travail client et comme adresse de destination l'adresse IP dudit serveur ;
- un module émetteur de paquets de données conforme au protocole Internet.

8. Module de masquage selon la revendication 6 ou 7, **caractérisé en ce que** les premiers moyens d'interception comportent au moins, connectés en cascade :
- un module proxy transparent recevant ledit message de réponse spécifique :
- un module de-récupération de l'adresse IP du dernier serveur proxy intermédiaire atteint par le message de requête d'accès et du port de traitement applicatif fourni par le dernier serveur proxy intermédiaire atteint par le message de requête d'accès ; et
- un module générateur de paquets de données conforme au protocole Internet ;
- un module émetteur de paquets de données conforme au protocole Internet.

## Patentansprüche

1. Verfahren zum Ausblenden einer Weiterverarbeitung einer Zugriffsanforderung zu einem Server, die von einer Kundenarbeitsstation entsandt wird, die an diesen Server über aufeinanderfolgende Proxy-Zwischenserver des Netzwerks gemäß dem Internet-Protokoll, IP, angeschlossen ist, **dadurch gekennzeichnet, dass** es mindestens darin besteht:
im Bereich des ersten Proxy-Servers, der von der Zugriffsanforderungsmeldung erreicht wird,
a) eine Weiterverarbeitung anzuwenden, die vom ersten Proxy-Zwischenserver an die Zugriffsanforderung geliefert wird,
b) die IP-Adresse der Kundenarbeitsstation in eines der spezifischen Datenfelder in der Kopfzeile der Zugriffsanforderungsmeldung einzusetzen; und
im Bereich der aufeinanderfolgenden Proxy-Server,
c) nacheinander die Zugriffsanforderung an den folgenden Proxy-Server zu übertragen, unter Verwendung als Sende-IP-Adresse der übertragenen Anforderung die IP-Adresse des betreffenden Proxy-Servers und unter Beibehaltung der IP-Adresse der Kundenarbeitsstation in der Kopfzeile der Anforderungsmeldung, wobei der folgende Proxy-Server eine Weiterverarbeitung ausführt, die er nach der aufeinanderfolgenden Ausführung der Weiterverarbeitung und der Übertragung der Zugriffsanforderung durch den letzten der aufeinanderfolgenden Proxy-Zwischenserver an den Server liefert; im Bereich eines Moduls zum Ausblenden, das im Unterbrechungsmodus mit dem Server zusammengeschaltet ist,
d) die Zugriffsanforderung durch Unterbrechung abzufangen;
e) die in jenes der spezifischen Felder der Kopfzeile der Zugriffsanforderungsmeldung eingesetzte Adresse zu löschen;
f) aus der Zugriffsanforderungsmeldung, die im vorherigen Schritt erhalten wurde, eine ausgeblendete Anforderungsmeldung zu konstruieren, umfassend als Sende-IP-Adresse die Adresse der Kundenarbeitsstation und als Empfangs-IP-Adresse die IP-Adresse des Servers;
g) von dem Ausblendmodul aus die ausgeblendete Anforderungsmeldung zum Server zu übertragen, wodurch es dem Server möglich ist, die ausgeblendete Anforderungsmeldung zu verarbeiten, wenn diese letztgenannte direkt von der Kundenarbeitsstation gekommen ist.

2. Verfahren nach Anspruch 1, **dadurch gekennzeichnet, dass** der Schritt, der darin besteht, das spezifische Feld der Kopfzeile der Anforderungsmeldung zu löschen, darin besteht:
e1) die IP-Adresse der Kundenarbeitsstation aus dem spezifischen Feld der Kopfzeile der Anforderungsmeldung zu speichern;
e2)die IP-Adressdaten der Kundenarbeitsstation in dem spezifischen Feld der Kopfzeile der Anforderungsmeldung zu löschen.

3. Verfahren nach einem der Ansprüche 1 oder 2, **dadurch gekennzeichnet, dass** dieses ferner nach dem Schritt, der darin besteht, im Unterbrechungsmodus abzufangen, einen Schritt umfasst, der darin besteht, die Sende-IP-Zwischenadresse der Anforderung entsprechend der IP-Adresse des letzten Proxy-Zwischenservers zu speichern.

4. Verfahren zur Übertragung einer transparenten Antwortmeldung von einem Server nach dem Internet-Protokoll zu einer Kundenarbeitsstation, wenn dieser Server von dieser Kundenarbeitsstation eine ausgeblendete Zugriffsanforderungsmeldung zu diesem Server erhalten hat, wobei die Zugriffsanforderungsmeldung zu dem Server nach einem Verfahren zum Ausblenden der Weiterverarbeitung einer Zugriffsanforderung zu dem Server geliefert wurde, die von der Kundenarbeitsstation entsandt wurde, die an diesen Server über aufeinanderfolgende Proxy-Zwischenserver nach dem Internet-Protokoll, IP-Netzwerk genannt, angeschlossen ist, wobei das Ausblendverfahren mindestens darin besteht:
a) eine Weiterverarbeitung anzuwenden, die vom ersten Proxy-Zwischenserver an die Zugriffsanforderung geliefert wird,
b) die IP-Adresse der Kundenarbeitsstation in eines der spezifischen Datenfelder in der Kopfzeile der Zugriffsanforderungsmeldung einzusetzen; und
im Bereich der aufeinanderfolgenden Proxy-Server,
c) nacheinander die Zugriffsanforderung an den folgenden Proxy-Server zu übertragen, unter Verwendung als Sende-IP-Adresse der übertragenen Anforderung die IP-Adresse des betreffenden Proxy-Servers und unter Beibehaltung der IP-Adresse der Kundenarbeitsstation in der Kopfzeile der Anforderungsmeldung, wobei der folgende Proxy-Server eine Weiterverarbeitung ausführt, die er nach der aufeinanderfolgenden Ausführung der Weiterverarbeitung und der Übertragung der Zugriffsanforderung durch den letzten der aufeinanderfolgenden Proxy-Zwischenserver an den Server liefert;
im Bereich eines Moduls zum Ausblenden, das im Unterbrechungsmodus mit dem Server zusammengeschaltet ist,
d) die Zugriffsanforderung durch Unterbrechung abzufangen;
e) die in jenes der spezifischen Felder der Kopfzeile der Zugriffsanforderungsmeldung eingesetzte Adresse zu löschen;
f) aus der Zugriffsanforderungsmeldung, die im vorherigen Schritt erhalten wurde, eine ausgeblendete Anforderungsmeldung zu konstruieren, umfassend als Sende-IP-Adresse die Adresse der Kundenarbeitsstation und als Empfangs-IP-Adresse die IP-Adresse des Servers;
g) von dem Ausblendmodul aus die ausgeblendete Anforderungsmeldung zum Server zu übertragen, wodurch es dem Server möglich ist, die ausgeblendete Anforderungsmeldung zu verarbeiten, wenn diese letztgenannte direkt von der Kundenarbeitsstation gekommen ist, wobei das Verfahren zur Übertragung einer transparenten Antwortmeldung **dadurch gekennzeichnet ist, dass** es nach der Übertragung einer spezifischen Antwortmeldung an die Empfangsadresse, IP-Adresse der Kundenarbeitsstation,
im Bereich eines Ausblendmoduls darin besteht:
h) die spezifische Antwortmeldung im Unterbrechungsmodus abzufangen;
i) aus der spezifischen Antwortmeldung die Empfangsadresse, IP-Adresse der Kundenarbeitsstation, zu entnehmen;
j) aus der Empfangsadresse die Zwischensendeadresse in dem IP-Netzwerk entsprechend der IP-Adresse des letzten Proxy-Zwischenservers, der von der Zugriffanforderungsmeldung erreicht wurde, zu unterscheiden;
k) aus der spezifischen Antwortmeldung eine rekonstruierte Antwortmeldung zu konstruieren, umfassend als Empfangsadresse die Zwischensende-IP-Adresse entsprechend der IP-Adresse des letzten Proxy-Zwischenservers, der von der Zugriffsanforderungsmeldung erreicht wurde;
l) die rekonstruierte Antwortmeldung von dem Ausblendmodul zum letzten Proxy-Zwischenserver zu übertragen, und
im Bereich des letzten Proxy-Zwischenservers und der aufeinanderfolgenden Proxy-Zwischenserver:
m) die entsprechende Weiterverarbeitung durchzuführen und nacheinander die rekonstruierte Antwortmeldung an den vorhergehenden Proxy-Server zu übertragen, und nach der aufeinanderfolgenden Ausführung jeder der Weiterverarbeitungen durch jeden der Proxy-Zwischenserver
im Bereich des ersten Proxy-Zwischenservers, der von der Zugriffsanforderungsmeldung erreicht wird:
n) eine transparente Antwortmeldung zu konstruieren, wobei in der rekonstruierten Antwortmeldung die Zwischensende-IP-Adresse entsprechend jener des ersten Proxy-Servers, der von der Anforderungsmeldung erreicht wird, durch die Sende-IP-Adresse entsprechend jener des Servers ersetzt wird;
o) die transparente Antwortmeldung von dem ersten Proxy-Server zu der Kundenarbeitsstation zu übertragen, wodurch es der Kundenarbeitsstation möglich ist, die transparente Antwortmeldung zu verarbeiten, als würde diese letztgenannte direkt vom Server kommen.

5. Verfahren nach Anspruch 4, **dadurch gekennzeichnet, dass** dieses für den Einsatz des Schrittes n), der darin besteht, eine transparente Antwortmeldung zu konstruieren, darin besteht:
n1) im Lesemodus die Empfangs-IP-Adresse der vorher bei der Übertragung dieser Zugriffsanforderungsmeldung im Bereich des ersten von dieser Zugriffsanforderungsmeldung erreichten Proxy-Servers gespeicherten Zugriffsanforderungsmeldung aufzurufen, und
n2) die aufgerufene Empfangs-IP-Adresse an Ort und Stelle der Zwischensende-IP-Adresse zu setzen, um die Sendeadresse im IP-Netzwerk entsprechend jener des Servers darzustellen.

6. Modul zum Ausblenden einer Weiterverarbeitung einer Zugriffsanforderung, die von einer Kundenarbeitsstation entsandt wird, die an einen Server über aufeinanderfolgende Proxy-Zwischenserver in einem Netzwerk nach dem Internet-Protokoll, IP, angeschlossen ist, und einer Antwort, die von diesem Server zu dieser Kundenarbeitsstation gesandt wird, **dadurch gekennzeichnet, dass** es mindestens umfasst:
- erste Abfangmittel, die derart ausgeführt sind, dass sie im Unterbrechungsmodus die Zugriffsanforderungsmeldung abfangen und aus der Zugriffsanforderung eine ausgeblendete Anforderungsmeldung erzeugen, umfassend als Sende-IP-Adresse die Adresse der Kundenarbeitsstation und als Empfangsadresse die IP-Adresse des Servers;
- zweite Abfangmittel, die derart ausgeführt sind, dass sie im Unterbrechungsmodus eine spezifische Antwortmeldung abfangen, die von dem Server als Antwort auf die ausgeblendete Anforderungsmeldung übertragen wurde, und aus dieser spezifischen Antwortmeldung eine rekonstruierte Antwortmeldung erzeugen;
- ein Speichermodul, das im Schreibmodus von den ersten Abfangmitteln und im Lesemodus von den zweiten Abfangmitteln zugänglich ist und es zumindest ermöglicht:
bei Abfangen einer Zugriffsanforderung die IP-Adresse der Kundenarbeitsstation aus einem spezifischen Feld der Kopfzeile der Zugriffsanforderungsmeldung und die IP-Adresse des letzten Proxy-Zwischenservers, der von der Zugriffsanforderungsmeldung erreicht wurde, zu speichern, und
bei Abfangen einer spezifischen Antwortmeldung die IP-Adresse des letzten Proxy-Zwischenservers, der von der Zugriffsanforderungsmeldung erreicht wurde, und des vom Proxy-Server gelieferten Ports zur Weiterverarbeitung zu entnehmen.

7. Ausblendmodul nach Anspruch 6, **dadurch gekennzeichnet, dass** die ersten Abfangmittel in Kaskade geschaltet mindestens umfassen:
- ein Proxy-Modul, das die Zugriffsanforderungsmeldung empfängt;
- ein Kopiermodul der IP-Adresse der Kundenarbeitsstation aus dem spezifischen Datenfeld der Kopfzeile dieser Zugriffsanforderungsmeldung und zum Löschen einer IP-Adresse aus dem spezifischen Datenfeld;
- ein Modul zur Erzeugung von Datenpaketen gemäß dem Internet-Protokoll, das es ermöglicht, die ausgeblendete Anforderungsmeldung zu konstruieren, umfassend als Sende-IP-Adresse die IP-Adresse der Kundenarbeitsstation und als Empfangsadresse die IP-Adresse des Servers;
- ein Modul zum Senden von Datenpaketen nach dem Internet-Protokoll.

8. Ausblendmodul nach Anspruch 6 oder 7, **dadurch gekennzeichnet, dass** die ersten Abfangmittel in Kaskade geschaltet mindestens umfassen:
- ein transparentes Proxy-Modul, das die spezifische Antwortmeldung empfängt;
- ein Modul zur Wiederherstellung der IP-Adresse des letzten Proxy-Zwischenservers, der von der Zugriffsanforderungsmeldung erreicht wurde, und des Ports zur Weiterverarbeitung, der vom letzten Proxy-Zwischenserver, der von der Zugriffsanforderungsmeldung erreicht wurde, geliefert wird; und
- ein Modul zur Erzeugung von Datenpaketen nach dem Internet-Protokoll;
- ein Modul zum Senden von Datenpaketen nach dem Internet-Protokoll.

## Claims

1. Method of masking application processing of an access request issued to a server by a client workstation connected to this server through successive intermediate proxy servers of the network, conforming to the IP Internet protocol, **characterized in that** it consists at least in:
at the first proxy server reached by the access request message,
a) applying an application processing provided by said first intermediate proxy server to said access request;
b) entering the IP address of the client workstation in one of the specific data fields of the header of said access request message; and
at said successive proxy servers,
c) transmitting successively the access request to the next proxy server, using, as the IP source address of the transmitted request, the IP address of the proxy server concerned, and retaining the IP address of the client workstation in the header of said request message, said next proxy server executing an application processing that it provides and, following the successive execution of the application processing and the transmission of said access request by the latter of said successive intermediate proxy servers towards said server;
at a masking module interconnected in line to said server,
d) intercepting in line said access request;
e) removing the address entered **in that** of said specific fields of the header of said access request message;
f) constructing, from the access request message obtained in the preceding step, a masked request message comprising, as the source IP address, the client workstation address and, as the destination IP address, the IP address of said server;
g) transmitting from said masking module said masked request message towards said server, which allows said server to process said masked request message, as if the latter came directly from the client workstation.

2. Method according to Claim 1, **characterized in that** said step consisting in removing said specific field of the header of said request message consists in:
e1) memorizing the IP address of the client workstation from said specific field of the header of said request message;
e2) deleting the IP address data of the client workstation in said specific field in the header of said request message.

3. Method according to one of Claims 1 and 2, **characterized in that** it further comprises, following the step consisting in intercepting in line, a step consisting in memorizing the intermediate source IP address of said request corresponding to the IP address of said last intermediate proxy server.

4. Method for transmitting a transparent reply message from a server conforming to the Internet protocol towards a client workstation, when this server has received from this client workstation a masked access request message to this server, said access request message having been sent to the server according to a method of masking application processing of an access request issued to the server by the client workstation connected to this server through successive intermediate proxy servers of a network conforming to the Internet protocol, called IP network, the masking method consisting at least in:
a) applying an application processing provided by said first intermediate proxy server to said access request;
b) entering the IP address of the client workstation in one of the specific data fields of the header of said access request message; and
at said successive proxy servers,
c) transmitting successively the access request to the next proxy server, using, as the IP source address of the transmitted request, the IP address of the proxy server concerned, and retaining the IP address of the client workstation in the header of said request message, said next proxy server executing an application processing that it provides and, following the successive execution of the application processing and the transmission of said access request by the latter of said successive intermediate proxy servers towards said server;
at a masking module interconnected in line to said server,
d) intercepting in line said access request;
e) removing the address entered in that of said specific fields of the header of said access request message;
f) constructing, from the access request message obtained in the preceding step, a masked request message comprising, as the source IP address, the client workstation address and, as the destination IP address, the IP address of said server;
g) transmitting from said masking module said masked request message towards said server, which allows said server to process said masked request message as if the latter came directly from the client workstation the method for transmitting a transparent reply message being **characterized in that** the latter consists, following the transmission of a specific reply message to the destination address, the IP address of said client workstation;
at a masking module, in:
h) intercepting in line said specific reply message;
i) extracting from said specific reply message, said destination address, IP address of said client workstation;
j) distinguishing, from said destination address, the intermediate source address in the IP network corresponding to the IP address of said last intermediate proxy server reached by said access request message;
k) constructing, from said specific reply message, a reconstructed reply message comprising, as destination address, said intermediate source IP address corresponding to the IP address of said last intermediate proxy server reached by said access request message;
l) transmitting said reply message reconstructed from the masking module towards said last intermediate proxy server; and
at said last intermediate proxy server and successive intermediate proxy servers, in:
m) executing the corresponding application processing and successively transmitting the reconstructed reply message to the preceding proxy server, and, after successive execution of each application processing by each of said intermediate proxy servers;
at said first intermediate proxy server reached by said access request message, in:
n) constructing a transparent reply message by replacing, in said reconstructed reply message, the intermediate source IP address corresponding to that of said first proxy server reached by said request message by the source IP address corresponding to that of the server.
o) transmitting said transparent reply message from said first proxy server to said client workstation, which allows said client workstation to process said transparent reply message as if the latter came directly from said server.

5. Method according to Claim 4, **characterized in that**, for the implementation of step n), which consists in constructing a transparent reply message, this consists in:
n1) calling up to read the destination IP address of the access request message, previously memorized during the transmission of this access request message, at the first proxy server reached by this access request message; and
n2) writing the destination IP address called up instead of the intermediate source IP address to constitute the source IP network address corresponding to that of the server.

6. Module for masking application processing of an access request sent by a client workstation connected to a server through successive intermediate proxy servers in a network conforming to the IP Internet protocol, and of a reply sent by this server to this client workstation, **characterized in that** it comprises at least:
- first interception means configured to intercept in line the access request message and to generate from said access request a masked request message comprising, as IP source address, the client workstation address and as destination address, the IP address of the server;
- second interception means configured to intercept in line a specific reply message transmitted by said server in reply to the masked request message, and to generate from this specific response message a reconstructed response message;
- a memory module with write access through the first interception means and read access through the second interception means and making it possible at least:
on intercepting an access request, to memorize the IP address of the client workstation from a specific field of the header of said access request message and the IP address of the last intermediate proxy server reached by said message access request; and
on intercepting a specific response message, to extract the IP address of the last intermediate proxy server reached by the access request message and of the port of the application processing provided by said proxy server.

7. Masking module according to Claim 6, **characterized in that** the first interception means comprise at least, connected in cascade:
- a proxy module receiving said access request message;
- a module for copying the IP address of said client workstation from the specific data field of the header of this message access request and for deleting an IP address of said specific data field;
- a data package generator module conforming to the Internet protocol allowing construction of the masked request message, having as its source IP address the IP address of the client workstation, and as the destination address the IP address of said server;
- a data package sending module conforming to the Internet protocol.

8. Masking module according to Claim 6 or 7, **characterized in that** the first interception means comprise at least, connected in cascade:
- a transparent proxy module receiving said specific response message;
- an IP address recovery module of the last intermediate proxy server reached by the access request message and of the port of the application processing provided by the last intermediate proxy server reached by the access request message; and
- a data package generator module conforming to the Internet protocol;
- a data package sending module conforming to the Internet protocol.
